Europäisches Patentamt

European Patent Office

Office européen des brevets

(11) Publication number: **0 423 676 A2**

# EUROPEAN PATENT APPLICATION

(21) Application number: 90119733.5

(51) Int. Cl.5: **B29C 67/14, B29C 43/18**

(22) Date of filing: 15.10.90

(30) Priority: 16.10.89 JP 270030/89
09.03.90 JP 59428/90

(43) Date of publication of application:
24.04.91 Bulletin 91/17

(84) Designated Contracting States:
BE DE ES FR GB IT NL

(71) Applicant: SUMITOMO CHEMICAL COMPANY,
LIMITED
Kitahama 4-chome 5-33
Chuo-ku Osaka 541(JP)

(72) Inventor: Hara, Takahisa
2-10-1-142, Sonehigashino-cho

Toyonaka-shi, Osaka-fu(JP)
Inventor: Matsumoto, Masahito
2-1-133, Kuwata-cho
Ibaraki-shi, Osaka-fu(JP)
Inventor: Usui, Nobuhiro
1-9-1-501, Tamagawa
Takatsuki-shi, Osaka-fu(JP)
Inventor: Matsubara, Shigeyoshi
1-7-3, Zuiko, Higashiyodogawa-ku
Osaka-fu(JP)

(74) Representative: Vossius & Partner
Siebertstrasse 4 P.O. Box 86 07 67
W-8000 München 86(DE)

(54) Method for producing molded article of fiber-reinforced thermoplastic resin.

(57) A molded article of a fiber-reinforced thermoplastic resin with good appearance and improved mechanical properties is produced by a method which comprises steps of supplying at least two porous fibrous sheets which optionally carry a thermoplastic resin sheet or film in a mold, supplying a melt mass of a thermoplastic resin which contains fibers as a reinforcing material dispersed therein in a space between said porous fibrous sheets, and forcing said resin melt to fill the pores of the porous sheets by resin supplying pressure and/or pressing pressure and to reach outer surfaces of said porous fibrous sheet or to adhere the thermoplastic resin to the thermoplastic resin sheet or film.

Fig. 1A

Fig. 1B

## METHOD FOR PRODUCING MOLDED ARTICLE OF FIBER-REINFORCED THERMOPLASTIC RESIN

The present invention relates to a method for producing a molded article of a fiber-reinforced thermoplastic resin, and more particularly, it relates to a method for producing a molded article of a fiber-reinforced thermoplastic resin which is less deformed due to orientation of reinforcing fibers and has good appearance, surface gloss and mechanical properties. The fiber-reinforced thermoplastic resin article can be used as various industrial materials including automobile parts such as exterior and interior panels, and structural and building materials.

Hitherto, some methods for producing a fiber-reinforced thermoplastic resin article have been proposed and industrially employed. One of the typical methods comprises molding the fiber-reinforced thermoplastic resin article from resin pellets containing short-length fibers in conventional molding manners such as injection molding. Another method uses thermoplastic resin pellets which are reinforced with middle-length fibers having substantially the same length as the pellets and produces the fiber-reinforced molded article by the conventional molding methods such as injection molding.

Recently, a so-called stampable sheet technique becomes attractive. In this technique, a sheet of the reinforced thermoplastic resin is re-heated and press molded to produce a molded article. Depending on the kinds of reinforcing fibers, the stampable sheet technique is roughly classified into two classes. In one of them, short-length fibers having a length of several mm to 100 mm and the thermoplastic resin powder are mixed by dry or wet blending, heated and roll pressed to form a stampable sheet, and the sheet is pre-heated and pressed to produce the fiber-reinforced thermoplastic resin article (cf. for example, Japanese Patent Kokai Publication No. 28135/1982). The other of them relates to a stampable sheet comprising long-length reinforcing fibers. In this case, the thermoplastic resin is extruded and laminated on a knit mat of the long-length fibers and roll pressed to form a stampable sheet, and then the sheet is pre-heated and pressed to produce the fiber-reinforced thermoplastic resin article.

However, each of the above techniques has it own technical and economical problems.

In the method using the resin pellet reinforced with the short-length fibers which is most commonly employed, improvement of the mechanical strength which is the most important object of the fiber reinforcing, particularly impact resistance is not sufficient, although moldability, design applicability and the production cost of this techni que are superior to other techniques. The reason for the insufficient increase of the mechanical strength is that, the fibers are severely broken during two plasticizing and kneading steps, namely the step for mixing and dispersing the fibers and the resins (the granulating step), and the molding step. In addition, since the fibers flow in the mold together with the resin melt in the molding step, the orientation of the fibers remains in the molded article and causes large deformation. When the inorganic fibers are used, they will wear screws and cylinders of extruders and an injection molding machine which are used for granulation and molding. Such wearing of the apparatuses increase the production cost of the molded article.

The method using the resin pellets reinforced with the middle-length fibers requires a specially designed extruder head, and the productivity is inferior to the method using the pellets reinforced with the short-length fibers. Therefore, the production cost increases. In addition, as in the case of the short-length fibers, the molded article tends to deform, and the screws and cylinders of the extruders and the injection molding machine are worn.

In the stampable sheet technique using the middle-or long-length fibers, since the fibers remaining in the article keep their original length, the article has considerably high mechanical strength.

However, in the production of the stampable sheet reinforced with monofilaments having middle length, the thermoplastic resin should be used in the powder form. Therefore, the production cost increases due to grinding of the rein mass. Further, in this case, specially designed expansive apparatuses such as a sheet forming machine, a roll press and a pre-heater are required. The fiber is less orientated than in case of the methods using the fiber reinforced pellets, but still there remains fiber orientation in the article, whereby the article may deform.

In the production of the stampable sheet reinforced with the long-length fibers, since only the resin melt flows but the fibers do not during molding, peripheral parts of the molded article contain no fiber, whereby the strength of the article becomes unstable. In addition, since the bundled fibers are used, the article has a rough surface. As in case of the stampable sheet reinforced with the middle-length fibers, the specially designed expensive apparatuses are required.

In addition to the above drawbacks, the molded article of the fiber-reinforced thermoplastic resin has much poorer appearance and gloss than a molded article of non-reinforced thermoplastic resin, since the fibers are exposed on the surface in the former.

One object of the present invention is to provide a fiber-reinforced thermoplastic resin article which has improved mechanical strength and good appearance and is less deformed.

Another object of the present invention is to provide a method for producing a molded article of a fiber-reinforced thermoplastic resin at a lower production cost.

According to a first aspect of the present invention, there is provided a method for producing a molded article of a fiber-reinforced thermoplastic resin, which comprises steps of:

supplying at least two porous fibrous sheets in a mold,

supplying a melt mass of a thermoplastic resin which contains fibers as a reinforcing material dispersed therein in a space between said porous fibrous sheets, and

forcing said resin melt to fill the pores of the porous sheets by resin supplying pressure and/or pressing pressure and to reach outer surfaces of said porous fibrous sheet.

According to a second aspect of the present invention, there is provided a method for producing a molded article of a fiber-reinforced thermoplastic resin (A) having a sheet or film of a thermoplastic resin (B) adhered to an outer surface of the molded article, which comprises steps of:

supplying at least two porous fibrous sheets in a mold,

supplying a melt mass of a thermoplastic resin which may optionally contain fibers as a reinforcing material dispersed therein in a space between said porous fibrous sheets, and

forcing said resin melt to fill the pores of the porous sheets by resin supplying pressure and/or pressing pressure and to adhere the thermoplastic resin (A) to a sheet or film of the thermoplastic resin (B) which is placed on the outermost surface of said porous fibrous sheet.

According to a third aspect of the present invention, there is provided a method for producing a molded article of a fiber-reinforced thermoplastic resin (A) having a sheet or film of a thermoplastic resin (B) adhered to an outer surface of the molded article, which comprises steps of:

supplying a melt mass of a thermoplastic resin (A) which may optionally contain fibers as a reinforcing material dispersed therein in a mold,

placing a composite sheet or film consisting of a porous fibrous sheet and a sheet or film of a thermoplastic resin (B) which can be adhered to the thermoplastic resin (A) on said melt mass of the thermoplastic resin (A) with facing said porous fibrous sheet to said melt mass, and

closing the mold to fill the pores of the porous sheets and to adhere the thermoplastic resin (A) to said sheet or film of the thermoplastic resin (B).


## BRIEF DESCRIPTION OF THE DRAWINGS

Figs. 1A and 1B schematically show a first embodiment of the method of the present invention,

Figs. 2A and 2B schematically show a second embodiment of the method of the present invention,

Figs. 3A and 3B schematically show a third embodiment of the method of the present invention,

Figs. 4A and 4B schematically show a fourth embodiment of the method of the present invention,

Figs. 5A and 5B schematically show a fifth embodiment of the method of the present invention,

Figs. 6A and 6B schematically show a sixth embodiment of the method of the present invention,

Figs. 7A and 7B schematically show a seventh embodiment of the method of the present invention,

Fig. 8 is a cross sectional view of a plasticizer for kneading a matrix resin and reinforcing fibers

Fig. 9 is an accumulator used in Examples of the present invention,

Fig. 10 shows a connection of the plasticizer and the accumulator used in the method of the present invention,

Fig. 11 is a perspective view of a molded article produced in one embodiment of the present invention which has no rib,

Fig. 12 is a perspective view of a molded article produced in another embodiment of the present invention which has two ribs,

Fig. 13 schematically shown an apparatus used in the falling weight impact strength test,


## DETAILED DESCRIPTION OF THE DRAWINGS

The present invention will be explained by making reference to the accompanying drawings.

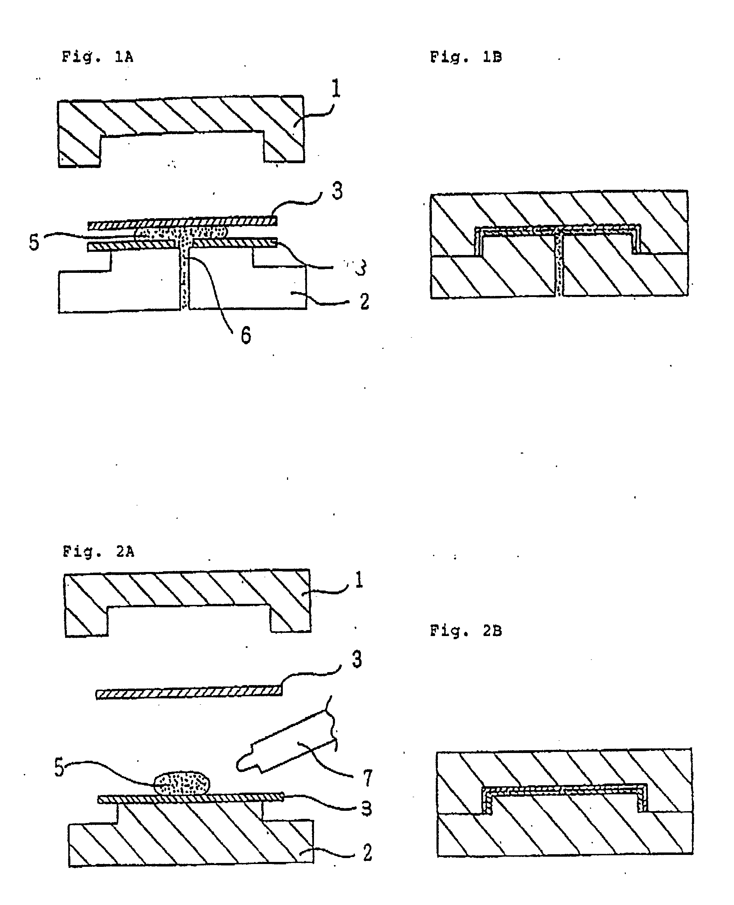

In a first embodiment of Fig. 1, a pair of porous fibrous sheets 3, 3 are placed on a lower mold 2 of an unclosed mold consisting of an upper mold 1 and the lower mold 2. A mass of resin melt 5 is supplied through a resin supplying conduit 6 into a space between the porous fibrous sheets 3, 3 as shown in Fig. 1A. To this end, the lower sheet has a hole at an area corresponding to an opening of the conduit 6. After or during the supply of the resin melt, the molds 1, 2 are closed as shown in Fig. 1B to press the resin melt and produce the fiber-reinforced molded article. After the porous fibrous sheets are placed in the mold, once the mold is closed and then the resin melt is supplied through the conduit 6.

In a second embodiment of Fig. 2, one porous fibrous sheet 3 is placed on the lower mold 2 and a mass of the resin melt is supplied from a supplying means 7 on the sheet 3 as shown in Fig. 2A. Then, the other sheet 3 is placed on the supplied resin melt and the molds are closed to press the resin melt and produce the fiber-reinforced molded article.

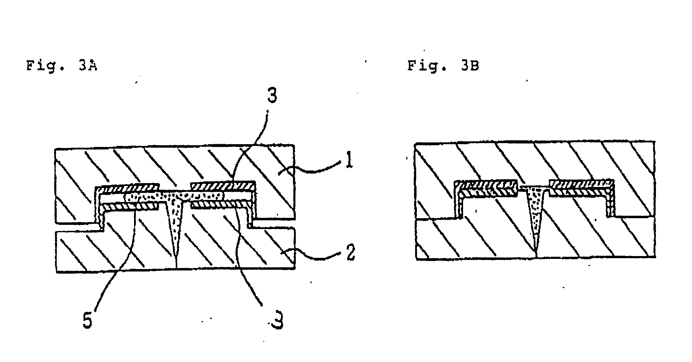

In a third embodiment as shown in Figs. 3A and 3B, the resin supply conduit opens in the space between the porous fibrous sheets 3, 3.

In the method of the present invention, the resin melt passes through pores of the porous fibrous sheets during molding. Since the flow resistance is large and, in case of the inorganic fibers, the heat is deprived from the resin melt so that the temperature of the resin melt is decreased, the flowability of the resin melt is deteriorated and the resin melt may not reach the outer surface of the fibrous sheet. To prevent this, the fibrous sheets are heated to a temperature of 60°C or higher before the resin melt is supplied.

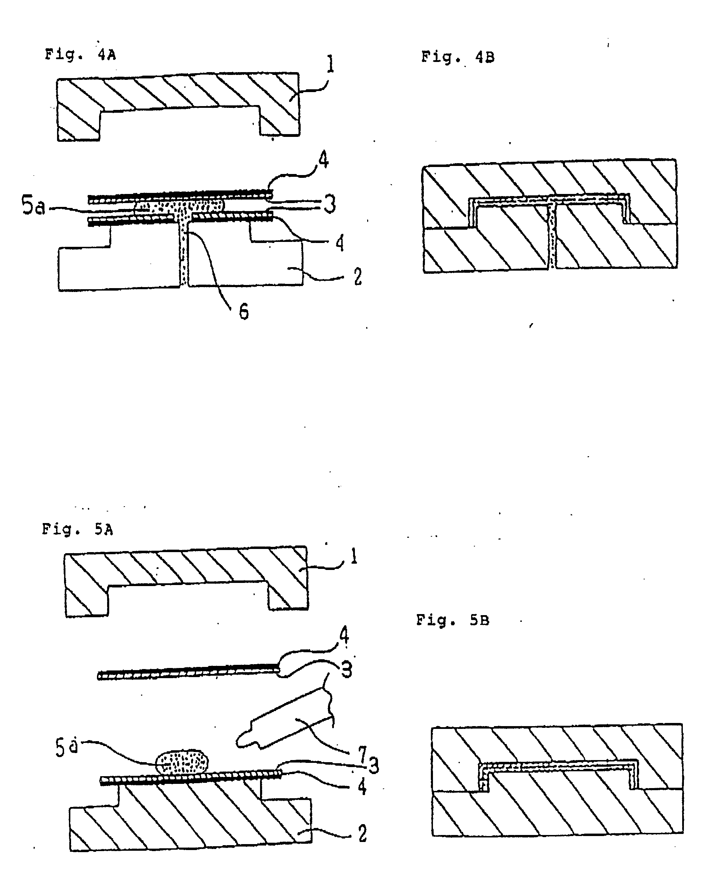

In the embodiments of Figs. 4 and 5, a pair of composite sheets or films each consisting of a porous fiber sheet 3 and a thermoplastic resin (B) 4 which can be adhered to the thermoplastic resin (A) are placed in the molds 1, 2 which may be closed or unclosed, and the belt mass of the thermoplastic resin (A) is supplied between the pair of composite sheets or films as shown in Figs. 4A and 5A. After or during the supply of the resin melt, the molds 1, 2 are closed as shown in Figs. 4B and 5B to press the resin melt and adhere the thermoplastic resin (A) to the sheet or film of the thermoplastic resin (B).

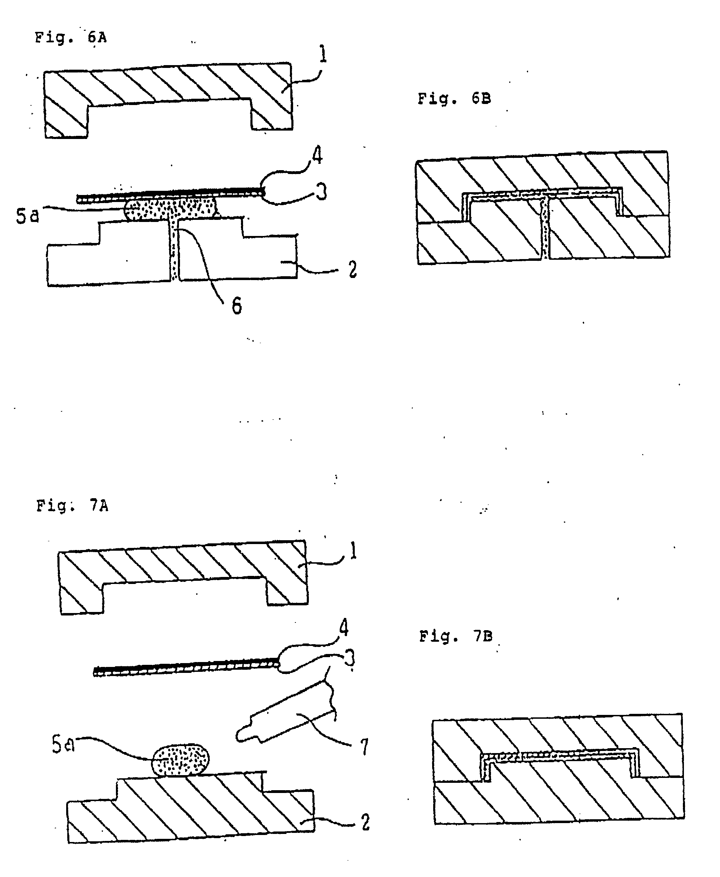

In the embodiments of Figs. 6 and 7, the melt mass of the thermoplastic resin (A) which may optionally contain fibers as a reinforcing material dispersed therein is supplied on the lower mold 2, and a composite sheet or film consisting of the porous fibrous sheet 3 and the thermoplastic resin (B) 4 which can be adhered to the thermoplastic resin (A) is placed on the supplied melt mass of the thermoplastic resin (A) with facing the porous fibrous sheet 3 to the melt mass. Then, the mold is closed to fill the pores of the porous sheet 3 and to adhere the thermoplastic resin (A) to the sheet or film 4 of the thermoplastic resin (B).

Specific examples of the thermoplastic resin (B) are polyethylene, polypropylene, polystyrene, an acrylonitrile-butadiene-styrene (ABS) copolymer, polyvinyl chloride, polyamide, polycarbonate, polyester, polyethylene terephthalate, polybutylene terephthalate, polyphenylene ether and mixtures and polymer alloys thereof.

The porous fibrous sheet may be produced from various kinds of fibers. Examples of the fibers are inorganic fibers (e.g. glass fiber, carbon fiber, stainless steel fiber, etc.), organic fibers (e.g. polyamide fiber, polyester fiber, aramid fiber, etc.) and mixtures thereof. When the glass fiber is used, the molded article is produced in a low cost and has good reinforcing effects. In general, the fiber has a diameter of 1 to 50 $\mu$m.

The fibrous sheet may contain a binder for maintaining the sheet form in an amount of 0.3 to 50 % by weight based on the weight of the fibers. Examples of the binder are polyvinyl alcohol, epoxy resins and the like. The fibrous sheet may be a simple sheet or premolded in a form conforming to the shape of the molded article.

The discontinuous fiber in the monofilament sheet has a length of not longer than 100 mm. In view of production of the monofilament sheet and mechanical strength of the molded article, the length of the fiber is preferably from 1 to 50 mm. The plural fibrous sheets may be made of the same kind of fiber or different kinds of fibers depending on the final use of the molded article and required properties.

By the present invention, any of the conventional thermoplastic resins (A) may be molded. Specific examples of the thermoplastic resin (A) to be molded by the present invention are polyethylene, polypropylene, polystyrene, an ABS resin, polyvinyl chloride, polyamide, polycarbonate, polyethylene terephthalate, polybutylene terephthalate, polyphenylene ether, a styrene-acrylonitrile copolymer and mixtures and polymer alloys thereof. To the thermoplastic resin (A), an inorganic filler such as talc, warastnite or glass fibers can be added so as to reduce a mold shrinkage factor to 10/1000 or less and a flexural modulus to 24,000 kg/cm$^2$ or larger. The thermoplastic resin may further con tain conventional additives such as a heat stabilizer and a UV light absorber, a colorant and an elastomer.

When the fiber-reinforced thermoplastic resin(A) is used, it contains comparatively long fibers having a length of 1 to 50 mm. To prepare such fiber-reinforced resin (A), resin pellets containing middle-length fibers may be used. However, in this case, the fibers are severely broken in the plasticizing step with a molding machine, so that the improvement of the mechanical properties of the molded article cannot be expected.

To overcome such drawback, a plasticizer as shown in Fig. 8 is used in the present invention. The plasticizer comprises a screw 11, a heating cylinder 12, a feed opening 8 for supplying the thermoplastic resin and a feed opening 9 for supplying the fibers. Over the feed opening 9, a metering device for supplying the fibers such as a roving cutter is provided. The plasticizer has an exhaust vent 10 for removing the air which is drawn in the plasticizer together with the fibers. Further, the plasticizer has a nozzle 13. The feed opening for supplying the fibers is provided in a middle part of the cylinder, and the exhaust vent 10 is provided on a side near the nozzle.

A ratio of screw length to screw diameter is at least 15.

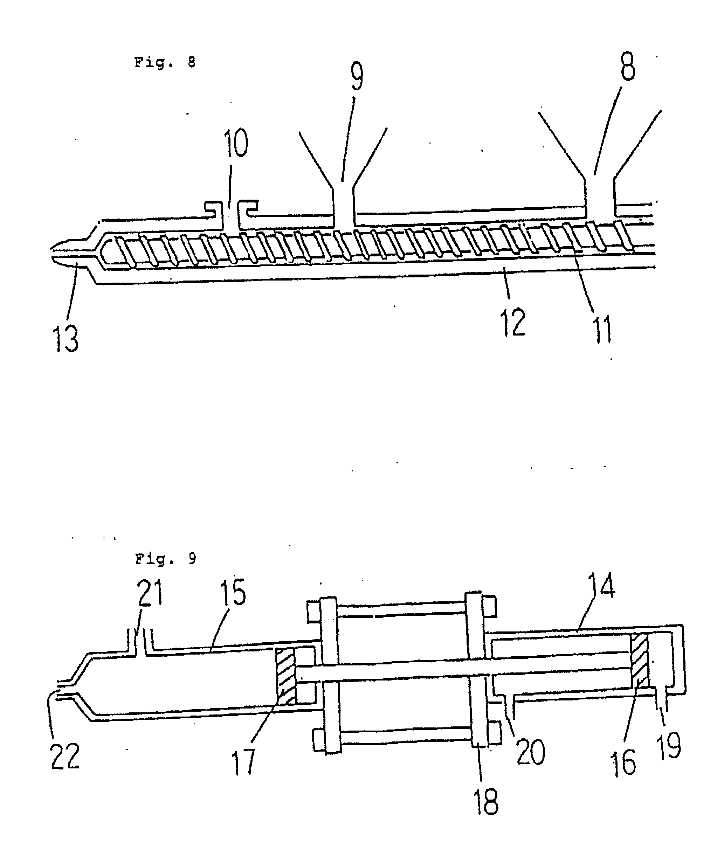

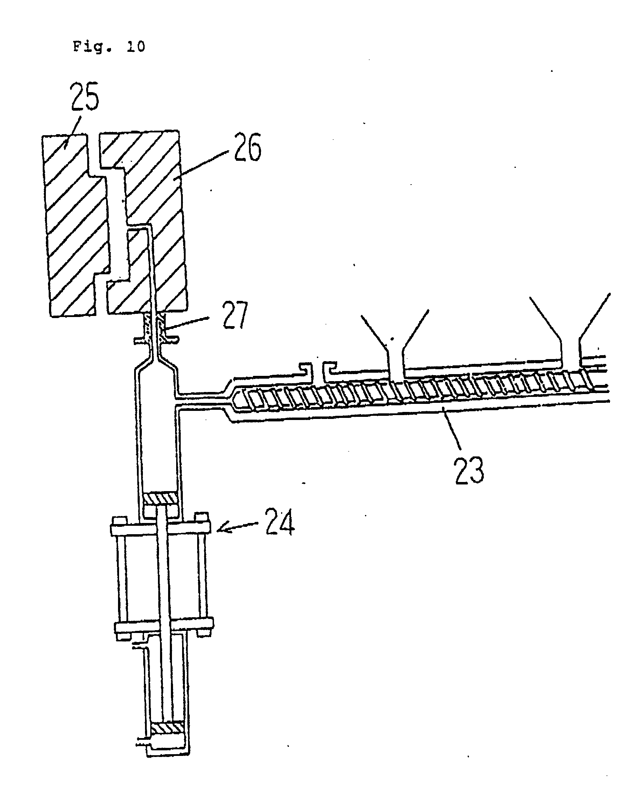

As shown in Fig. 10, the nozzle 13 is connected to an accumulator of Fig. 9. The accumulator has an end conne ction 21 to be connected with the plasticizer through which the resin melt is supplied. The accumulator of Fig. 9 has a hydraulic piston cylinder 14 with a piston 16 and a resin melt cylinder 15 with a piston 17. The cylinders 14 and 15 are supported by a support frame 18. With an oil which is supplied and removed through inlets 19 and 20, the pistons are moved and the resin melt stored in the cylinder 15 is injected through a discharging opening 22.

By using the apparatus of Fig. 10, it is possible to prepare a resin melt in which long fibers are dispersed, and to produce the molded article with considerably improved mechanical strength at low cost.

When the ratio of screw length to screw diamter is less than 15, a distance from the center inlet for fibers to the ventilation outlet and a distance from the inlet for fibers to the tip end of the nozzle are too short so that the fibers are not well dispersed in the resin melt and the the air is not sufficiently removed

The fiber may be a monofilament or a bundled fiber consisting of several ten to several hundred monofilaments bundled with a sizing agent. The fiber may be beforehand cut to a length of 1 to 50 mm, or a long fiber may be cut at the feed opening for supplying the fibers. Examples of the fiber are inorganic fibers (e.g. glass fiber, carbon fiber, stainless steel fiber, etc.), organic fibers (e.g. polyamide fiber, polyester fiber, aramid fiber, etc.) and mixtures thereof.

The present invention will be illustrated by the following Examples. The test method used in Examples are as follows:

Flexural test

A three-point bending test according to JIS K 7203. Test pieces are cut out from a bottom late or a rib part of a box-shaped molded article of Fig. 12 and have a thickness of 2 mm, a width of 10 mm and a length of 90 mm. The test is carried out at 23°C.

Impact test (1) (Izod notched impact test)

According to JIS K 7110, Izod notched impact test is carried out at 23°C. Test pieces are cut out from a bottom plate or a rib part of a box-shaped molded article of Fig. 12 and have a thickness of 2 mm, a width of 12.7 mm and a length of 63.5 mm.

Impact test (2) (Falling weight impact test)

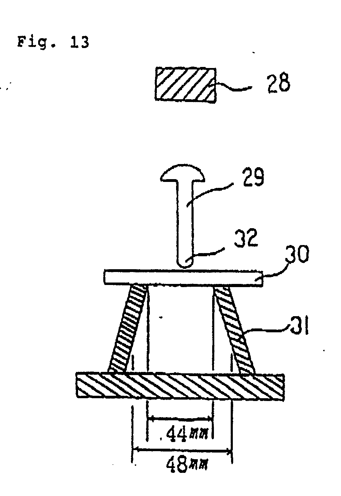

This test is carried out by using the apparatus shown in Fig. 13.

On a test piece 30 (50 mm x 50 mm x 2 mm) cut out from the glass fiber-reinforced molded article, an impact piece 29 is placed. On the impact piece 29, a weight 28 is dropped from a certain height. The lowest height at which the test piece is broken is regarded as a breaking height, from which a destructive energy is calculated according to the equation:

Destructive energy (Kg.cm) = Weight (kg) x Breaking height (cm)

The destructive energy is used to express the impact strength.

Deformation of the molded article

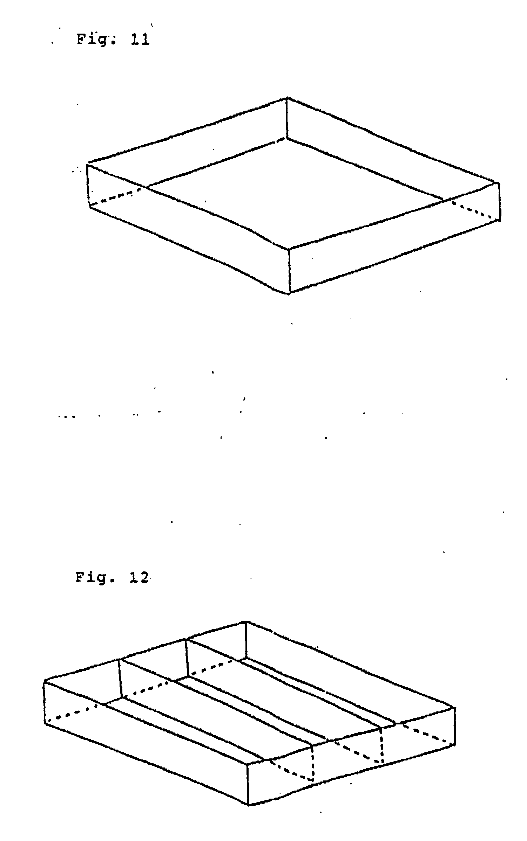

The molded article having the shape of Fig. 11 is placed on a flat plate with contacting the bottom of the article to the plate. Each corner is pressed against the flat plate and a distances between the plate and the bottom of each of other corners is measured. The maximum distance is used to express a degree of deformation.

5

Fiber content

A sample piece of fiber-reinforced resin is weighed and placed on an iron plate. Then, the sample piece is heated by heating a lower side of the iron plate with a gas burner to burn the resin. The heated and burnt sample piece is further heated in an electric furnace at 450°C for 2 hours to remove all combustible materials. After cooling, residues are weighed and a fiber content is calculated according to the following equation:

$$\text{Fiber content (\%)} = \frac{\text{Weight of residues after burning}}{\text{Weight of sample before burning}} \times 100$$

Average fiber length

By the same way as in the calculation of fiber content, the resin is removed from the sample piece. From a center part which is not damaged by cutting for preparing the sample piece, an arbitrary amount of fibers is collected and lengths of fibers are measured and averaged.

Appearance of the molded article

A surface roughness tester (an ultra roughness tester SURFCOM manufactured by Toyo Seimitsu, Co., Ltd.) is used to measure the surface roughness of the molded article.

Example 1

A vertical press molding machine with a mold locking force of 200 tons was used to mold a fiber-reinforced article. A mold consisted of an upper mold half and a lower mold half, and the lower mold half had, at its center part, a resin supplying conduit having a diamter of 2 mm and a manifold connected to the conduit.

To prepare a resin in which long-length fibers were dispersed, the plasticizer of Fig. 8 and the accumulator of Fig. 9 were connected as shown in Fig. 10 and used in the test. The plasticizer with a screw diameter of 50 mm and a ratio of screw length to screw diameter of 29 was used. At a central part of the cylinder, an feed opening for supplying the fiber was provided and on the nozzle side, an exhaust vent was provided. The nozzle of the plasticizer was connected with the accumulator through an adaptor.

Over the feed opening for supplying the fibers, a roving cutter was provided. As the fiber, Glass Fiber PER 231-SM14 (manufactured by Nippon Glass Fiber Co., Ltd.) was supplied after cut to a length of 13 mm with the roving cutter into the interior of the plasticizer through the feed opening for supplying the fibers. The exhaust vent was connected with a vacuum pump to carry out forced ventilation. A nozzle of the resin melt cylinder was connected with the manifold 27 which was connected to the conduit in the lower mold half.

The mold was designed to produce a box-shaped article as shown in Fig. 11 having a length of 200 mm, a width of 200 mm, a depth of 40 mm and a wall thickness of 2.0 mm, or a box-shaped article of Fig. 12 which had the same sizes as those of Fig. 11 except that two ribs each having a wall thickness of 2.0 mm and a height of 40 mm were formed.

As a porous fibrous sheet, a non-woven fabric which is made from discontinuous glass monofilaments (Cumulas Sheet VHM 5075 manufactured by Nippon Vilene) was used. As a thermoplastic resin, an ethylene-propylene copolymer (Sumitomo Noblen AX 568 manufactured by Sumitomo Chemical Co., Ltd; melt flow index: 65 g/10 min.) was used.

In an unclosed mold, eight sheets of the above glass fiber non-woven fabric were placed. At the center part of each of the lower four sheets corresponding to the opening of the resin supplying conduit in the lower mold half, a hole having a diameter of 10 mm was made. The glass fiber sheets were preheated to 60°C and placed on the lower mold half. A mass of molten thermoplastic resin in which the long-length fibers were dispersed was supplied from the accumulator through the resin supplying conduit and the opening into spaces between the the glass fiber sheets. Then, the mold was closed to mold the resin at a pressure of 100 kg/cm$^2$. To measure a fiber content and an average fiber length, samples were collected from a manifold discharge opening and a rib part shown in Fig. 12.

The evaluation of the molded article was made with the box-shaped article of Fig. 11, and the mechanical strength of the molded article was evaluated with the box-shaped article with the ribs of Fig. 12.

The results are shown in Tables 1 and 2.

Example 2

In the same manner as in Example 1 but using a plasticizer with a screw diameter of 50 mm and a ratio of screw length to screw diameter of 20, a fiber-reinforced molded article was produced. The test results are shown in Table 1.

Example 3

In the same manner as in Example 1 but cutting the supplied fiber to a length of 6 mm with the roving cutter, a fiber-reinforced molded article was produced. The test results are shown in Table 1.

Example 4

In the same manner as in Example 1 but cutting the supplied fiber to a length of 25 mm with the roving cutter, a fiber-reinforced molded article was produced. The test results are shown in Table 1.

Example 5

In the same manner as in Example 1 but placing four sheets of the glass fiber non-woven fabric VHM 5075 in the unclosed mold, supplying a mass of molten polypropylene containing long-length fibers dispersed therein from the accumulator and quickly placing other four sheets of the glass fiber non-woven fabric VHM 5075, removing the nozzle of accumulator from the mold and then closing a mold, a fiber-reinforced molded article was produced. The test results are shown in Table 1.

Comparative Example 1

In the same manner as in Example 1 but using an ethylene-propylene copolymer (Sumitomo Noblen AX 568) as a thermoplastic resin, closing the feed opening for supplying the fibers and the exhaust vent and using no glass fiber non-woven sheet, a molded article was produced. The test results are shown in Table 1.

Comparative Example 2

In the same manner as in Comparative Example 1 but using a polypropylene resin containing 30 % by weight of glass fibers (Sumitomo Noblen GHH 43 manufactured by Sumitomo Chemical Co., Ltd.) as a thermoplastic resin, a fiber-reinforced molded article was produced. The test results are shown in Table 1.

Comparative Example 3

In the same manner as in Comparative Example 1 but using a mixture of 75 parts by weight of a polypropylene resin containing 40 % by weight of glass fibers (G40-4 manufactured by Polyplastics Co., Ltd.) and 25 parts by weight of non-reinforced polypropylene resin (Sumitomo Noblen W 501 manufactured by Sumitomo Chemical Co., Ltd.) as thermoplastic resins, a fiber-reinforced molded article was produced. The test results are shown in Table 1.

### Comparative Example 4

In the same manner as in Example 1 but using an ethylene-propylene copolymer (Sumitomo Noblen AX 568) as a thermoplastic resin, supplying glass fibers (PER 231-SM 14) which had been cut to length of 13 mm with the roving cutter from the feed opening for supplying the fibers, connecting a vacuum vent to the exhaust vent and using no glass fiber non-woven fabric, a fiber-reinforced molded article was produced. The test results are shown in Table 1.

### Comparative Example 5

In the same manner as in Example 1 but using a plasticizer with a screw diameter of 50 mm and a ratio of screw length to screw diameter of 10, a fiber-reinforced molded article was produced.

Since the reinforcing fibers were not well dispersed in the thermoplastic resin and the ventilation was insufficient, many bundled fibers remained and the resin contained many bubbles so that the mechanical properties varied very much. Then, it was impossible to measure correct physical property data.

### Example 6

First, in the mold, one extruded sheet of PP/EPDM/Nylon 6 (Flexloy (trade mark) D-2000 manufactured by Sumitomo Chemical Co., Ltd.) having a thickness of 300 $\mu$m was placed and, on the extruded sheet, four sheets of Cumulas Sheet VHM 5075 as porous fibrous sheets were laminated. At the center part of the extruded sheets and the porous fibrous sheets corresponding to the opening of the resin supplying conduit in the lower mold, a hole having a diameter of 10 mm was made. Further, on the porous fibrous sheets, further four sheets of Cumulas Sheet VHM 5075 and a Flexloy sheet were laminated. Then, in the same manner as in Example 1, a fiber-reinforced molded article was produced.

### Example 7

In the same manner as in Example 6 but closing the feed opening for supplying the fibers and the exhaust vent (therefore supplying no fibers), a fiber-reinforced molded article was produced.

### Example 8

In the same manner as in Example 6 but using a polypropylene resin (Sumitomo Noblen BWH 44, talc content of 40 %, molding shrinkage factor of 8/1000, flexural modulus of 52,000 kg/cm$^2$) in place of Sumitomo Noblen AX 568, a fiber-reinforced molded article was produced.

### Example 9

In the same manner as in Example 1 but placing eight sheets of non-woven fabric (Cumulas VHM 5075) on the lower mold and then placing a Flexloy D 2000 sheet on the non-woven fabric sheets, a fiber-reinforced molded article having an integrally modled laminate consisting of an inner layer of VHM 5075 and an outer layer of Flexloy D 2000 on one side was produced.

### Example 10

In the same manner as in Example 9 but closing the feed opening for supplying the fibers and the exhaust vent (therefore supplying no fibers) and using Sumitomo Noblen BWH 44 as a thermoplastic resin, a fiber-reinforced molded article was produced.

### Comparative Example 6

In the same manner as in Example 7 but no thermoplastic sheet (Flexloy D 2000), a fiber-reinforced molded article was produced.

Comparative Example 7

In the same manner as in Example 7 but using neither thermoplastic sheet (Flexloy D 2000) nor porous fibrous sheet (Cumulas VHM 5075), a fiber-reinforced molded article was produced.

Table 1

| Example No. | Thermo-plastic resin | Glass fiber length (mm) | Glass fiber sheet (No.) | Residual average fiber length (mm) | | Glass fiber content (%) | |
|---|---|---|---|---|---|---|---|
| | | | | Accumulator outlet | Rib of article | Accumulator outlet | Rib of article |
| 1 | AX 568 | 13 | VHM 5075 (8) | 7.5 | 6.3 | 15.5 | 14.3 |
| 2 | AX 568 | 13 | VHM 5075 (8) | 7.8 | 7.0 | 15.0 | 15.3 |
| 3 | AX 568 | 6 | VHM 5075 (8) | 3.8 | 4.0 | 15.3 | 15.1 |
| 4 | AX 568 | 25 | VHM 5075 (8) | 9.0 | 8.6 | 15.1 | 15.6 |
| 5 | AX 568 | 13 | VHM 5075 (8) | 7.5 | 6.3 | 15.5 | 14.3 |
| Com.1 | AX 568 | -- | --- | --- | --- | ---- | ---- |
| Com.2 | GHH 43 | -- | --- | 0.3 | 0.3 | 31.2 | 30.8 |
| Com.3 | G40-4 (75 %) W 501 (25 %) | -- | --- | 1.4 | 1.1 | 29.8 | 30.0 |
| Com.4 | AX 568 | 13 | --- | 7.5 | 6.9 | 14.9 | 14.8 |
| Com.5 | AX 568 | 13 | VHM 5075 (8) | 9.1 | 9.3 | 12.4 | 14.3 |

EP 0 423 676 A2

Table 1 (continued)

| Exam-ple No. | Flexural modulus (kg/cm$^2$) | | Impact strength[1] (kg-cm/cm) | | Defor-mation (mm) | Ratio of screw length to diameter |
|---|---|---|---|---|---|---|
| | Bottom plate | Rib part | Bottom plate | Rib part | | |
| 1 | 80,000 | 33,000 | 65 | 16 | 3 | 29 |
| 2 | 78,000 | 34,000 | 63 | 18 | 3 | 20 |
| 3 | 78,000 | 33,000 | 61 | 15 | 4 | 29 |
| 4 | 79,000 | 34,000 | 67 | 16 | 3 | 29 |
| 5 | 80,000 | 33,000 | 65 | 16 | 3 | 29 |
| Com.1 | 14,500 | 14,500 | 3 | 3 | 2 | 29 |
| Com.2 | 55,000 | 55,000 | 7 | 7 | 28 | 29 |
| Com.3 | 55,000 | 55,000 | 8 | 8 | 29 | 29 |
| Com.4 | 33,000 | 33,000 | 17 | 17 | 27 | 29 |
| Com.5 | --- | --- | -- | --- | -- | 10 |

Note: [1] Measured according to JIS K 7110.

Table 2

| Example No. | Thermoplastic resin | Glass fiber (wt%) | Glass fiber sheet (No.) (VHM 5075) | Thermoplastic sheet (No.) (Flexloy D 2000) | Falling weight impact strength (Bottom plate) (kg.cm) | Flexural tests[*1] | | Deformation (mm) | Surface roughness (um) |
|---|---|---|---|---|---|---|---|---|---|
| | | | | | | Strength $(kg/cm^2)$ | Modulus $(kg/cm^2)$ | | |
| 6 | AX 568 | 15 | Upper 4 Lower 4 | Upper 1 Lower 1 | 66[*2] | --- | 80,000 | 3 | 0.8 |
| 7 | AX 568 | -- | Upper 4 Lower 4 | Upper 1 Lower 1 | 260 | 1200 | 55,000 | 1 | 0.35 |
| 8 | BWH 44 | -- | Upper 4 Lower 4 | Upper 1 Upper 1 | 300 | 1600 | 80,000 | 1 | 0.5 |
| 9 | AX 568 | 15 | Upper 8 Lower 0 | Upper 1 Lower 0 | 45[*2] | --- | 61,000 | 1 | 0.8 |
| 10 | BWH 44 | -- | Upper 8 Lower 0 | Upper 1 Lower 0 | 300 | 1600 | 80,000 | 4 | 0.8 |
| Com.6 | AX 568 | -- | Upper 4 Lower 4 | Upper 0 Lower 0 | 220 | 1200 | 55,000 | 1 | 3 |
| Com.7 | AX 568 | -- | Upper 0 Lower 0 | Upper 0 Lower 0 | 25 | 370 | 14,500 | 2 | 3 |
| Note: | | | | | | | | | |

*1 Bottom plate.
*2 Measured according to JIS K 7110.

EP 0 423 676 A2

## Claims

1. A method for producing a molded article of a fiber-reinforced thermoplastic resin, which comprises steps of:

supplying at least two porous fibrous sheets in a mold,

supplying a melt mass of a thermoplastic resin which contains fibers as a reinforcing material dispersed therein in a space between said porous fibrous sheets, and

forcing said resin melt to fill the pores of the porous sheets by resin supplying pressure and/or pressing pressure and to reach outer surfaces of said porous fibrous sheet.

2. The method according to claim 1, wherein said porous fibrous sheet is made of continuous or discontinuous monofilaments.

3. The method according to claim 1 or 2, wherein said thermoplastic resin is a fiber-reinforced thermoplastic resin containing fibers with an average length of 1 to 50 mm which has been prepared by using a plasticizer which has a ratio of screw length to screw diameter of at least 15 and is provided with a feed opening for supplying fibers at a middle part thereof and an exhaust vent on a side near a nozzle.

4. A method for producing a molded article of a fiber-reinforced thermoplastic resin (A) having a sheet or film of a thermoplastic resin (B) adhered to an outer surface of the molded article, which comprises steps of:

supplying at least two porous fibrous sheets and at least one film or sheet of a thermoplastic resin (B) in a mold,

supplying a melt mass of a thermoplastic resin which may optionally contain fibers as a reinforcing material dispersed therein in a space between said porous fibrous sheets, and

forcing said resin melt to fill the pores of the porous sheets by resin supplying pressure and/or pressing pressure and to adhere the thermoplastic resin (A) to a sheet or film of the thermoplastic resin (B) which is placed on the outermost surface of said porous fibrous sheet.

5. The method according to claim 4, wherein said porous fibrous sheet is made of continuous or discontinuous monofilaments.

6. The method according to claim 4 or 5, wherein said thermoplastic resin (A) has a mold shrikage factor of not larger than 10/1000 and a flexural modulus of not smaller than 24,000 kg/cm$^2$.

7. The method according to claim 4, 5 or 6, wherein said thermoplastic resin is a fiber-reinforced thermoplastic resin containing fibers with an average length of 1 to 50 mm which has been prepared by using a plasticizer which has a ratio of screw length to screw diameter of at least 15 and is provided with a feed opening for supplying fibers at a middle part thereof and an exhaust vent on a side near a nozzle.

8. A method for producing a molded article of a fiber-reinforced thermoplastic resin (A) having a sheet or film of a thermoplastic resin (B) adhered to an outer surface of the molded article, which comprises steps of:

supplying a melt mass of a thermoplastic resin (A) which may optionally contain fibers as a reinforcing material dispersed therein in a mold,

placing a composite sheet or film consisting of a porous fibrous sheet and a sheet or film of a thermoplastic resin (B) which can be adhered to the thermoplastic resin (A) on said melt mass of the thermoplastic resin (A) with facing said porous fibrous sheet to said melt mass, and

closing the mold to fill the pores of the porous sheets and to adhere the thermoplastic resin (A) to said sheet or film of the thermoplastic resin (B).

9. The method according to claim 8, wherein said porous fibrous sheet is made of continuous or discontinuous monofilaments.

10. The method according to claim 8 or 9, wherein said thermoplastic resin (A) has a mold shrikage factor of not larger than 10/1000 and a flexural modulus of not smaller than 24,000 kg/cm$^2$.

11. The method according to claim 8, 9, or 10, wherein said thermoplastic resin is a fiber-reinforced thermoplastic resin containing fibers with an average length of 1 to 50 mm which has been prepared by using a plasticizer which has a ratio of screw length to screw diameter of at least 15 and is provided with a feed opening for supplying fibers at a middle part thereof and an exhaust vent on a side near a nozzle.

Fig. 1A

Fig. 1B

Fig. 2A

Fig. 2B

Fig. 3A

Fig. 3B

Fig. 4A

Fig. 4B

Fig. 5A

Fig. 5B

Fig. 6A

Fig. 6B

Fig. 7A

Fig. 7B

Fig. 8

9

8

10

13

12

11

Fig. 9

21

15

14

22

17

18

20

16

19

Fig. 10

Fig. 11

Fig. 12

Fig. 13

28
29
32
30
31

.44mm
48mm